# EUROPEAN PATENT APPLICATION

(11) **EP 4 625 656 A1**
(43) Date of publication of application: **01.10.2025**
(21) Application number: 24905144.2
(22) Date of filing: 29.11.2024
(51) Int. Cl.: H01M 50/24

(54) **BATTERY PACK FOR SUPPLYING POWER TO ELECTRONIC DEVICE**

(30) Priority: 08.01.2024 CN 202420048245 U; 08.01.2024 CN 202410026933; 08.01.2024 CN 202420047906 U
(71) Applicant: Nanjing Chervon Industry Co., Ltd., Nanjing, Jiangsu 211106 (CN)
(72) Inventor: LIU, Xiaopan, Nanjing, Jiangsu 211106 (CN); HE, Qiangqiang, Nanjing, Jiangsu 211106 (CN); CHENG, Yugang, Nanjing, Jiangsu 211106 (CN); QIAN, Haihang, Nanjing, Jiangsu 211106 (CN); YANG, Qiheng, Nanjing, Jiangsu 211106 (CN); ZHANG, Yuexiang, Nanjing, Jiangsu 211106 (CN); WU, Xiaoli, Nanjing, Jiangsu 211106 (CN); LI, Taibao, Nanjing, Jiangsu 211106 (CN)
(74) Representative: Sun, Yiming
(86) International application number: PCT/CN2024/135666
(87) International publication number: WO 2025/148554

(57) **Abstract**

Provided is an energy storage apparatus. Specifically, a battery pack for powering an electronic device is provided. The battery pack for powering an electronic device includes a housing assembly, a cell module, at least one temperature detection apparatus, and a detection support. The housing assembly is mounted to the electronic device and supported by the electronic device. The cell module includes multiple cells and a cell support supporting the multiple cells, where the cell module is disposed in the housing assembly. Multiple temperature detection apparatuses are configured to detect temperatures of the multiple cells. The detection support is configured to support a temperature detection apparatus to cause the position of the temperature detection apparatus in the housing assembly to be fixed. In the battery pack for powering an electronic device, the temperature detection apparatus is fixed through the detection support, which can ensure that the temperature detection apparatus can detect a temperature of a cell and prevent the temperature detection apparatus from falling off.

## Description

This application claims priority to Chinese Patent Application No. 202420048245.0 filed with the China National Intellectual Property Administration (CNIPA) on Jan. 8, 2024, Chinese Patent Application No. 202410026933.1 filed with the CNIPA on Jan. 8, 2024, and Chinese Patent Application No. 202420047906.8 filed with the CNIPA on Jan. 8, 2024, the disclosures of which are incorporated herein by reference in their entireties.

### TECHNICAL FIELD

The present application relates to an energy storage apparatus and, in particular, to a battery pack for powering an electronic device.

### BACKGROUND

Based on the use requirement for portability, more and more power tools currently use battery packs as power sources. Each battery pack includes a temperature detection apparatus configured to detect a cell temperature. A battery pack in the related art has a temperature detection apparatus directly inserted on a cell support or at another position, and the temperature detection apparatus is not firmly mounted.

This part provides background information related to the present application, and the background information is not necessarily the related art.

### SUMMARY

An object of the present application is to solve or at least alleviate part or all of the preceding problems. Therefore, one object of the present application is to provide a battery pack for powering an electronic device, which improves the firmness of a temperature detection apparatus.

To achieve the preceding object, the present application adopts the technical solutions below.

A battery pack for powering an electronic device includes a housing assembly mounted to the electronic device and supported by the electronic device; a cell module including multiple cells and a cell support supporting the multiple cells, wherein the cell module is disposed in the housing assembly; at least one temperature detection apparatus configured to detect temperatures of the multiple cells; and a detection support configured to support a temperature detection apparatus to cause the position of the temperature detection apparatus in the housing assembly to be fixed.

In some examples, the temperature detection apparatus is detachably fixed on the detection support.

In some examples, the cell support is provided with a fixing hole, and the detection support is fixed in the fixing hole.

In some examples, an adhesive is disposed between the fixing hole and the detection support to fix the detection support in the fixing hole.

In some examples, the cell support is formed with an accommodating cavity for accommodating a cell, an avoidance space is provided in the accommodating cavity, and the avoidance space communicates with the fixing hole.

In some examples, the battery pack further includes a coupling portion, where the coupling portion includes at least a terminal assembly, and a stiffener is embedded in the coupling portion.

In some examples, the battery pack further includes a flexible circuit board, where the flexible circuit board is disposed on a module end surface of the cell module formed by positive end surfaces and negative end surfaces of the multiple cells, and the temperature detection apparatus is electrically coupled to the flexible circuit board through a detection power line.

In some examples, tin soldering is used between the detection power line and the flexible circuit board.

In some examples, the battery pack further includes a printed circuit board (PCB), where the PCB includes a control circuit board or a battery management circuit board, and the flexible circuit board is electrically connected to the PCB through a flexible disk cable (FDC).

In some examples, the FDC and the PCB are connected to each other through an anisotropic conductive film (ACF) process.

In some examples, gold fingers on the FDC are connected to gold fingers on the PCB through laser welding.

In some examples, the cell module further includes multiple cell connectors, each cell connector connects at least two cells, and the cell connector is connected to the at least two cells through welding.

In some examples, the cell connectors include copper-aluminum composite connectors, and laser welding is used between the copper-aluminum composite connectors and the cells and is used between the copper-aluminum composite connectors.

In some examples, different welding regions of each of the copper-aluminum composite connectors have different thicknesses.

A battery pack for powering an electronic device includes: a housing assembly mounted to the electronic device and supported by the electronic device; a cell module comprising multiple cells and a cell support supporting the multiple cells, where the cell module is disposed in the housing assembly; and at least one temperature detection apparatus configured to detect temperatures of the multiple cells. A temperature detection apparatus is operable to be fixed on the cell support through an external apparatus.

In some examples, each of the at least one temperature detection apparatus corresponds to one external apparatus, and the external apparatus is configured as a detection support capable of supporting the temperature detection apparatus.

In some examples, the external apparatus is configured as a support housing to support the temperature detection apparatus.

In some examples, the external apparatus is detachably mounted on the cell support.

In some examples, the external apparatus is configured as a plastic member or a metal member.

A battery pack for powering an electronic device includes: a housing assembly mounted to the electronic device and supported by the electronic device; a cell module including multiple cells and disposed in the housing assembly, where the multiple cells are capable of providing a voltage greater than or equal to 36 V; and a terminal assembly connected to the multiple cells and configured to electrically connect the battery pack to the electronic device. The inside of the housing assembly is completely sealed and isolated from the outside of the housing assembly.

**In** some examples, at least part of a sealing structure of the housing assembly includes a gluing groove, and the gluing groove is used for injecting a sealant.

**In** some examples, the sealant is a polyurethane foam sealant with two components mixed.

**In** some examples, the sealant is a silica gel foam sealant with two components mixed.

**In** some examples, the sealant is a hot-melt foam sealant.

**In** some examples, the housing assembly includes at least a barrel and an upper cover, the cell module is disposed in the barrel, the upper cover is disposed at the upper end of the barrel, the gluing groove is provided at the upper end of the barrel, the sealant is disposed in the gluing groove, and the gap between the barrel and the upper cover is sealed through the sealant.

**In** some examples, the housing assembly further includes a base disposed at the lower end of the barrel, and the gap between the barrel and the base is sealed through a sealing member.

**In** some examples, the barrel and the upper cover are connected to each other through a fixing member, the barrel and the base are connected to each other through a fixing member, and the gap between the fixing member and the housing assembly is sealed through a sealing member.

**In** some examples, the gap between the housing assembly and the terminal assembly is sealed through a sealing member.

In some examples, an electronic display assembly is disposed on the housing assembly, and the gap between the housing assembly and the electronic display assembly is sealed through a sealing member.

In some examples, the cell module further includes a cell support and a sealing cover, the multiple cells are disposed in the cell support, the end of each of the multiple cells facing the opening side of the cell support is sleeved with a sealing sleeve, the sealing cover seals and covers the opening side of the cell support, and the gap between the sealing cover and the cell support is sealed through a sealing member.

A battery pack for powering an electronic device includes: a housing assembly mounted to the electronic device and supported by the electronic device; a cell module including multiple cells and disposed in the housing assembly, where the multiple cells are capable of providing a voltage greater than or equal to 36 V; and a terminal assembly connected to the multiple cells and configured to electrically connect the battery pack to the electronic device. The battery pack further includes multiple sealing members, and the multiple sealing members are configured to seal multiple gaps of the housing assembly that are capable of communicating with the outside so that the sealing level of the sealed housing assembly is higher than or equal to IP6IPX2.

A battery pack for powering an electronic device includes: a housing assembly mounted to the electronic device and supported by the electronic device; a cell module including multiple cells and disposed in the housing assembly, where the multiple cells are capable of providing a voltage greater than or equal to 36 V; a terminal assembly connected to the multiple cells and configured to electrically connect the battery pack to the electronic device; and multiple fixing members configured to fix at least the housing assembly. The battery pack further includes sealing members configured to seal at least the gaps between the fixing members and the housing assembly.

A battery pack for powering an electronic device includes: a housing assembly mounted to the electronic device and supported by the electronic device; a cell module including multiple cells and disposed in the housing assembly, where the multiple cells are capable of providing a voltage greater than or equal to 36 V; and a flexible circuit board disposed on a module end surface of the cell module formed by positive end surfaces and negative end surfaces of the multiple cells. The battery pack further includes a reinforcement member attached to at least part of the flexible circuit board to enhance the strength of the flexible circuit board.

In some examples, the cell module further includes multiple cell connectors, each cell connector connects at least two cells, and the flexible circuit board is connected to the cell connectors through welding.

In some examples, a pad is provided on the flexible circuit board and is connected to the cell connector through welding.

In some examples, a welding slot is provided on the cell connector, a through hole is provided on the pad, and a welding material is capable of flowing into the welding slot through the through hole.

In some examples, the reinforcement member is located between the cell connector and the flexible circuit board.

In some examples, the reinforcement member is provided with an avoidance region for avoiding the pad.

In some examples, an adhesive backing is disposed on the pad, and the pad is connected to the cell connector through the adhesive backing.

In some examples, an adhesive backing is disposed at the edge of the reinforcement member, and the reinforcement member is connected to the cell support through the adhesive backing.

In some examples, an adhesive backing is disposed on the flexible circuit board, and the flexible circuit board is connected to the reinforcement member through the adhesive backing.

In some examples, the battery pack further includes a temperature detection apparatus coupled to the flexible circuit board through a detection power line, and the detection power line is connected to the flexible circuit board through welding.

A battery pack for powering an electronic device includes: a housing assembly mounted to the electronic device and supported by the electronic device; a cell module including multiple cells and disposed in the housing assembly, where the multiple cells are capable of providing a voltage greater than or equal to 36 V; and a flexible circuit board disposed on a module end surface of the cell module formed by positive end surfaces and negative end surfaces of the multiple cells. The flexible circuit board includes an FDC.

A battery pack for powering an electronic device includes: a housing assembly mounted to the electronic device and supported by the electronic device; a cell module including multiple cells and disposed in the housing assembly, where the multiple cells are capable of providing a voltage greater than or equal to 36 V; and an FDC disposed on a module end surface of the cell module formed by positive end surfaces and negative end surfaces of the multiple cells. The battery pack further includes a temperature detection apparatus coupled to the FDC through a detection power line.

A battery pack for powering an electronic device includes: a housing assembly mounted to the electronic device and supported by the electronic device; a cell module including multiple cells and disposed in the housing assembly, where the multiple cells are capable of providing a voltage greater than or equal to 36 V; and a flexible circuit board disposed on a module end surface of the cell module formed by positive end surfaces and negative end surfaces of the multiple cells. The cell module further includes multiple cell connectors, each cell connector connects at least two cells, and the flexible circuit board is connected to the cell connectors through welding. A pad is disposed on a cell connector, and a heat dissipation space is provided in at least part of a region adjacent to the pad.

A battery pack for powering an electronic device includes: a housing assembly mounted to the electronic device and supported by the electronic device; a cell module including multiple cells and disposed in the housing assembly, where the multiple cells are capable of providing a voltage greater than or equal to 36 V; and a flexible circuit board disposed on a module end surface of the cell module formed by positive end surfaces and negative end surfaces of the multiple cells. The flexible circuit board includes FDCs. At least part of the FDCs have different cable diameters.

### BRIEF DESCRIPTION OF DRAWINGS

FIG. 1 is a structural view of a battery pack from a first angle of view according to an example of the present application;
FIG. 2 is a structural view of a battery pack from a second angle of view according to an example of the present application;
FIG. 3 is an exploded view showing a housing assembly of a battery pack and a handle of the battery pack according to an example of the present application;
FIG. 4 is an exploded view showing a barrel and a base involved in an example of the present application;
FIG. 5 is a sectional view of a barrel involved in an example of the present application;
FIG. 6 is an exploded view of an electronic display assembly involved in an example of the present application;
FIG. 7 is exploded view one of a cell module involved in an example of the present application;
FIG. 8 is exploded view two of a cell module involved in an example of the present application;
FIG. 9 is a structural view showing a flexible circuit board and a temperature detection apparatus involved in an example of the present application;
FIG. 10 is a structural view of a cell connector involved in an example of the present application;
FIG. 11 is a structural view showing a pad on a flexible circuit board involved in an example of the present application;
FIG. 12 is a structural view showing the back of a reinforcement member involved in an example of the present application;
FIG. 13 is a structural view of a cell support involved in an example of the present application;
FIG. 14 is a partial enlarged view of part A in FIG. 13;
FIG. 15 is a structural view showing a temperature detection apparatus and a detection support involved in an example of the present application;
FIG. 16 is a structural view showing a power line in a housing assembly involved in an example of the present application;
FIG. 17 is a schematic view showing an FDC involved in an example of the present application; and
FIG. 18 is a schematic view showing the connection of a single-cell detection line involved in an example of the present application.

### Reference list

- 100: battery pack
- 10: housing assembly
- 11: barrel
- 111: coupling groove
- 1111: groove sidewall
- 1111a: mounting rail
- 112: stiffener
- 113: gluing groove
- 12: upper cover
- 121: receiving slot
- 13: base
- 20: cell module
- 21: cell
- 221: accommodating cavity
- 222: fixing hole
- 23: cell connector
- 231: welding slot
- 2311: heat dissipation space
- 232: detection connection portion
- 24: reinforcement member
- 241: avoidance region
- 242: first adhesive backing
- 25: flexible circuit board
- 251: pad
- 2511: through hole
- 2512: second adhesive backing
- 252: FDC
- 2521: thin FDC
- 26: temperature detection apparatus
- 27: detection power line
- 28: detection support
- 29: power line
- 210: power line support
- 211: single-cell detection line
- 30: terminal assembly
- 40: handle
- 51: pin
- 52: elastic reset member
- 53: damping member
- 60: electronic display assembly
- 61: transparent member
- 62: lampshade assembly
- 63: switch
- 64: adapter
- 65: spring
- 71: first sealing member
- 72: second sealing member
- 73: fourth sealing member
- 74: fifth sealing member
- 81: first fixing member
- 82: second fixing member

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. **In** addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

**In** this application, those skilled in the art will understand that a function performed by an assembly may be performed by one assembly, multiple assemblies, one member, or multiple members. Likewise, a function performed by a member may be performed by one member, an assembly, or a combination of members.

**In** this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. **It** should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

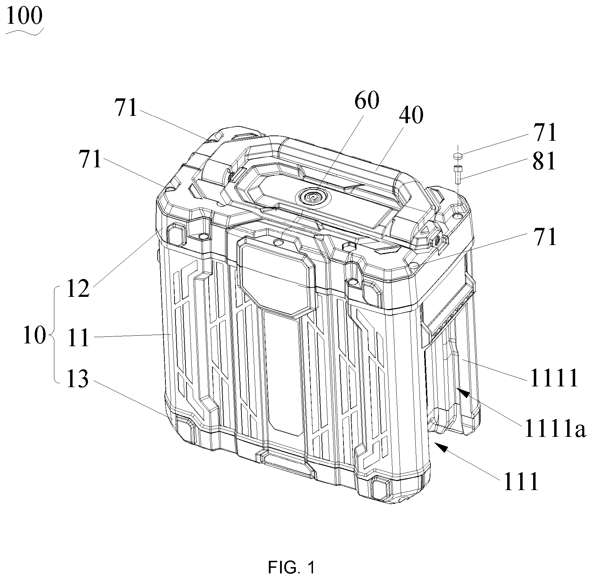

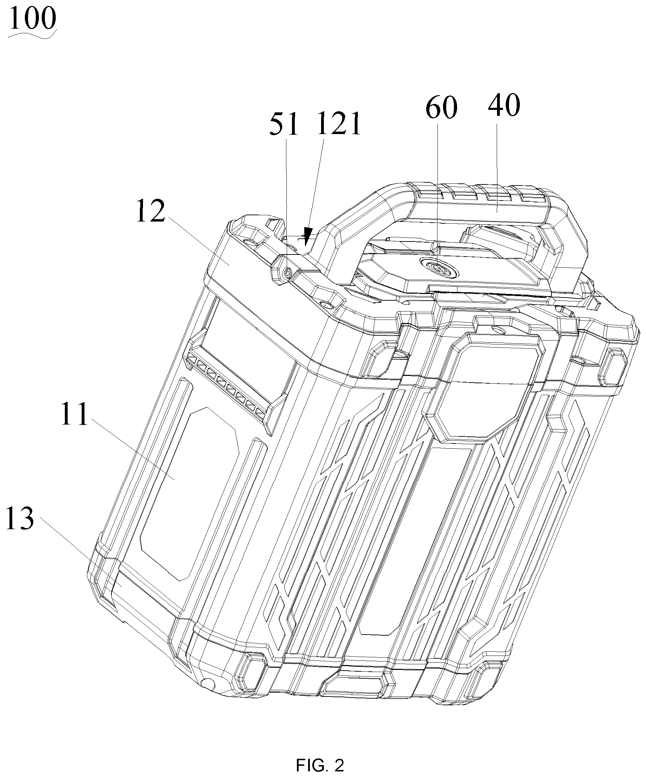

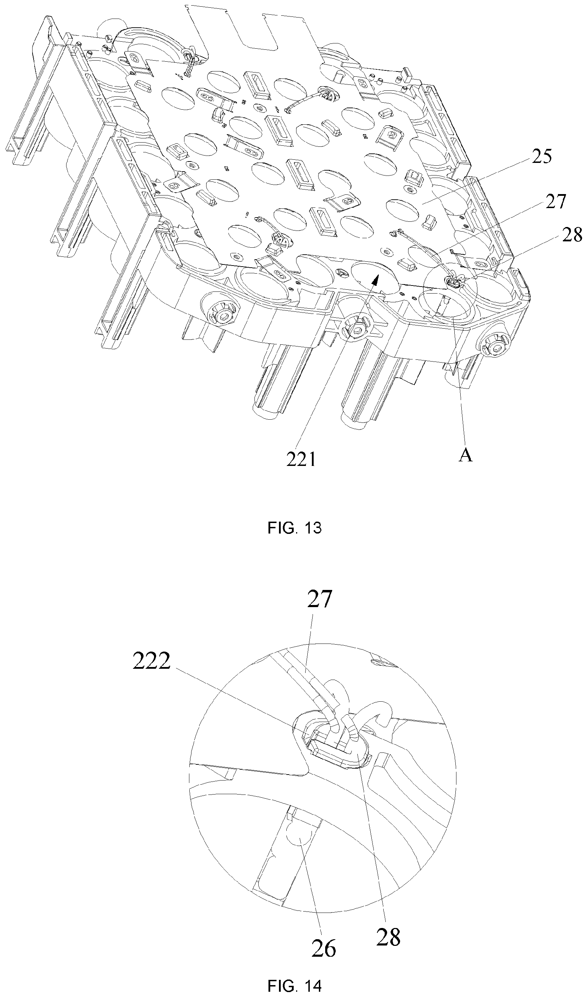

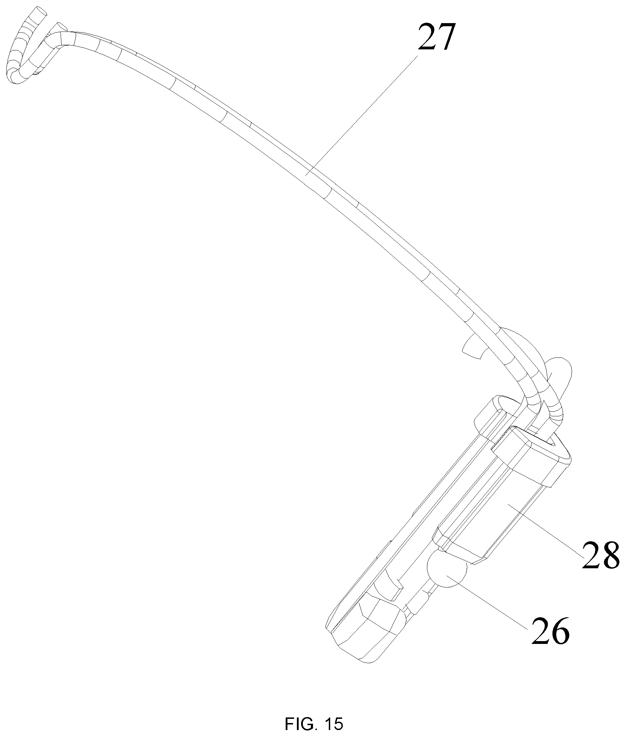

As shown in FIGS. 1 to 16, the present application provides a battery pack 100. The battery pack 100 is an energy storage apparatus capable of storing electrical energy to power an electronic device. In this example, the electronic device may include a large outdoor walking device, for example, a riding mower and a snow thrower. The electronic device may also include some energy conversion apparatuses, such as an adapter or an inverter. The energy conversion apparatuses can convert electrical energy outputted by the battery pack 100 to power another power tool such as an electric drill, a pruner, or a sander. Alternatively, the power tool may be a table tool, for example, a table saw or a miter saw. Alternatively, the power tool may be a push power tool, for example, a push mower or a push snow thrower. Alternatively, the power tool may be a riding power tool, for example, a riding mower, a riding vehicle, or an allterrain vehicle. Alternatively, the power tool may be a robotic tool, for example, a robotic mower or a robotic snow thrower. In some examples, the power tool may be an electric drill, an electric lamp, an electric vehicle, or the like. In some examples, the power tool may be a garden tool, for example, a pruner, a blower, a mower, or a chainsaw. Alternatively, the power tool may be a decorating tool, for example, a screwdriver, a nail gun, a circular saw, or a sander. In some examples, the power tool may be a vegetation care tool, for example, a string trimmer, a mower, a pruner, or a chainsaw.

Alternatively, the power tool may be a cleaning tool, for example, a blower, a snow thrower, or a cleaning machine. Alternatively, the power tool may be a drilling tool, for example, a drill, a screwdriver, a wrench, or an electric hammer. Alternatively, the power tool may be a sawing tool, for example, a reciprocating saw, a jigsaw, or a circular saw. Alternatively, the power tool may be a table tool, for example, a table saw, a miter saw, a metal cutter, or an electric router. Alternatively, the power tool may be a sanding tool, for example, an angle grinder or a sander. Alternatively, the power tool may be another tool, for example, a lamp or a fan.

In an example, the nominal voltage or rated voltage of the battery pack 100 is greater than or equal to 56 V, or greater than or equal to 50 V, or greater than or equal to 48 V, or greater than or equal to 40 V, or greater than or equal to 36 V, or greater than or equal to 30 V, or greater than or equal to 20 V, or greater than or equal to 10 V, and the like.

The battery pack 100 includes a housing assembly 10, a cell module 20, and a terminal assembly 30. The housing assembly 10 forms the body of the battery pack 100 and is substantially in the shape of a rectangular cuboid. The housing assembly 10 is formed with an accommodating space for accommodating the cell module 20. In an example, referring to FIGS. 1 to 3, the housing assembly 10 may include an upper cover 12, a barrel 11, and a base 13. The upper cover 12, the barrel 11, and the base 13 can constitute a substantially closed accommodating space. Of course, the housing assembly 10 may include a left housing and a right housing, an upper and a lower housing, or housings assembled in another form. The terminal assembly 30 is mounted on the housing assembly 10 and is connected to the cell module 20. The battery pack 100 is electrically connected to the electronic device through the terminal assembly 30 to power the electronic device. In other examples, wheels may be detachably disposed under the housing assembly 10. The wheels support the housing assembly 10 so that a user can move the battery pack 100 with less effort.

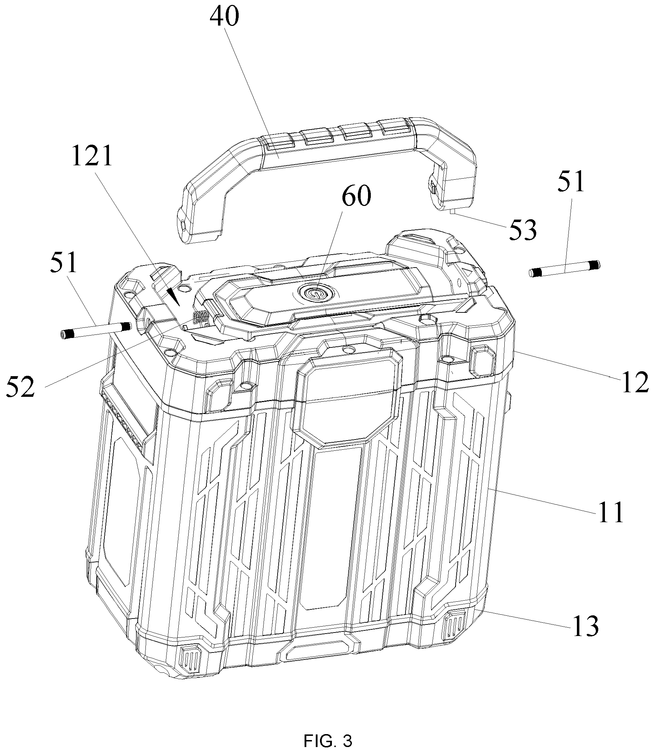

To facilitate the operation of the user, a handle 40 may also be disposed on the housing assembly 10 so that it is convenient for the user to lift the battery pack 100. In an example, the handle 40 and the housing assembly 10 may be integrally formed. In an example, with continued reference to FIGS. 1 to 3, the handle 40 is detachably mounted on one surface of the housing assembly 10. For example, the upper surface of the housing assembly 10 is recessed inward to form a receiving slot 121. The handle 40 may be fixed to a slot wall of the receiving slot 121 through pins 51 and is rotatable about the pins 51 by an angle of approximately 180° on the upper surface of the housing assembly 10. In other words, when not lifted for use, the handle 40 may be stored in the receiving slot 121 so that the dimension of the battery pack 100 can be reduced. Thus, the battery pack 100 is placed in the electronic device. Of course, another storage portion formed or mounted on the housing assembly 10 and used for storing the handle 40 without increasing the volume of the battery pack 100 is also within the scope of this example. In an example, referring to FIG. 3, an elastic reset member 52 may be further disposed at a joint between the handle 40 and the housing assembly 10. When the handle 40 is not lifted, the elastic reset member 52 may reset the handle 40 into the receiving slot 121. In an implementation, the elastic reset member 52 may be a torsion spring. In an example, a damping member 53 is further disposed on the handle 40 to enhance a damping feel and slowly reset the handle 40. In this example, the damping member 53 may be a rubber post. The damping member 53 can generate frictional damping with the upper cover 12 in a resetting process of the handle 40 through an interference fit with the upper cover 12. Thus, the damping member 53 can prevent the handle 14 from being reset.

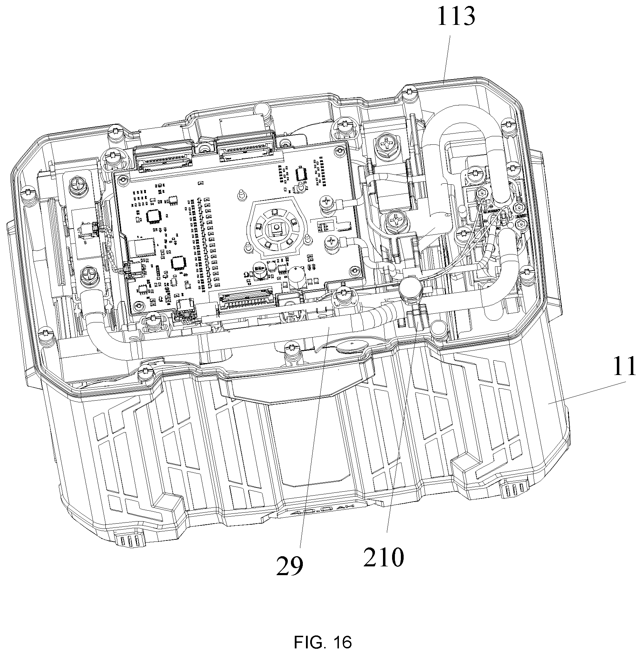

To improve the sealing property of the housing assembly 10, the inside of the housing assembly 10 is completely sealed and isolated from the outside of the housing assembly 10. The so-called "being completely sealed" may be understood as follows: the accommodating space formed by the housing assembly 10 is an airtight space. In some examples, at least part of a sealing structure of the housing assembly 10 includes a gluing groove 113, and the gluing groove 113 is used for injecting a sealant. For example, as shown in FIG. 16, the gluing groove 113 is provided at the upper end of the barrel 11. The sealant is injected into the gluing groove 113, and the gap between the barrel 11 and the upper cover 12 is sealed through the sealant. When the sealant is injected into the gluing groove 113, a polyurethane foam sealant process may be used. Specifically, a two-component dispensing system is used for mixing a component A of a polyurethane foam sealant and a component B of the polyurethane foam sealant and dispensing the mixed components into the gluing groove 113 that needs to be sealed. After the two components start to react and foam, the foam is filled into the gluing groove 113, and then the upper cover 12 and the barrel 11 are locked and assembled. Thus, the gap between the upper cover 12 and the barrel 11 is sealed and waterproof. Alternatively, a silica gel foam sealant process may be used. Specifically, a two-component dispensing system is used for mixing a component A of a silica gel foam sealant and a component B of the silica gel foam sealant and dispensing the mixed components into the gluing groove 113 that needs to be sealed. After the two components start to react and foam, the foam is filled into the gluing groove 113, and then the upper cover 12 and the barrel 11 are locked and assembled. Thus, the gap between the upper cover 12 and the barrel 11 is sealed and waterproof. Alternatively, a single-component silica gel sealing process may be used. For example, sealing is performed with a single-component dealcoholized sulfurized silica gel through a formed-in-place gasket (FIPG) process. Alternatively, a hot-melt foam sealant process may be used. Specifically, a hot-melt glue gun is used for dispensing a non-reactive hot-melt foam sealant into the gluing groove 113 that needs to be sealed. The hot-melt sealant starts to foam after being cooled. The foam is filled into the gluing groove 113, and then the upper cover 12 and the barrel 11 are locked and assembled. Thus, the gap between the upper cover 12 and the barrel 11 is sealed and waterproof. The sealing materials or the sealing processes mentioned above may also be used in any other portion of the battery pack 100 that needs to be sealed, which is not enumerated here.

In some examples, multiple gaps of the housing assembly 10 that are capable of communicating with the outside are sealed by multiple sealing members so that the sealing level of the sealed housing assembly 10 is higher than or equal to IPX2.

As shown in FIG. 1, the barrel 11 and the upper cover 12 are locked and assembled through first fixing members 81. The first fixing members 81 are screws, the barrel 11 is provided with first threaded holes, and the upper cover 12 is provided with first through holes. The screws penetrate through the first through holes and then are threaded into the first threaded holes. Gaps exist between the screws and the upper cover 12. Therefore, referring to FIG. 1, to ensure the sealing property of the housing assembly 10, first sealing members 71 are used for sealing the gaps between the screws and the upper cover 12. The first sealing members 71 may be sealing plugs here, and the first through holes are plugged with the sealing plugs.

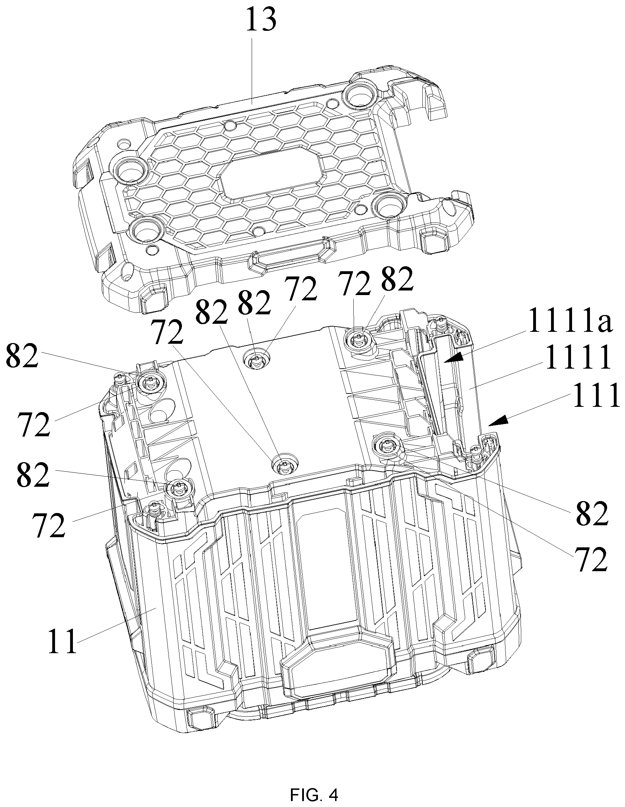

As shown in FIG. 4, the barrel 11 and the base 13 are locked and assembled through second fixing members 82. The second fixing members 82 are screws, the barrel 11 is provided with second threaded holes, and the base 13 is provided with second through holes. The screws penetrate through the second through holes and then are threaded into the second threaded holes. Gaps exist between the base 13 and the barrel 11. Therefore, to ensure the sealing property of the housing assembly 10, the gaps between the base 13 and the barrel 11 are sealed through second sealing members 72. The second sealing members 72 may be sealing gaskets. The sealing gaskets are disposed between the barrel 11 and the base 13. Referring to FIG. 4, the second sealing members 72 may be disposed around the screws. In addition, gaps also exist between the screws and the base 13. To ensure the sealing property of the housing assembly 10, the gaps between the screws and the base 13 are sealed through third sealing members. The third sealing members may be sealing plugs here, and the second through holes are plugged with the sealing plugs.

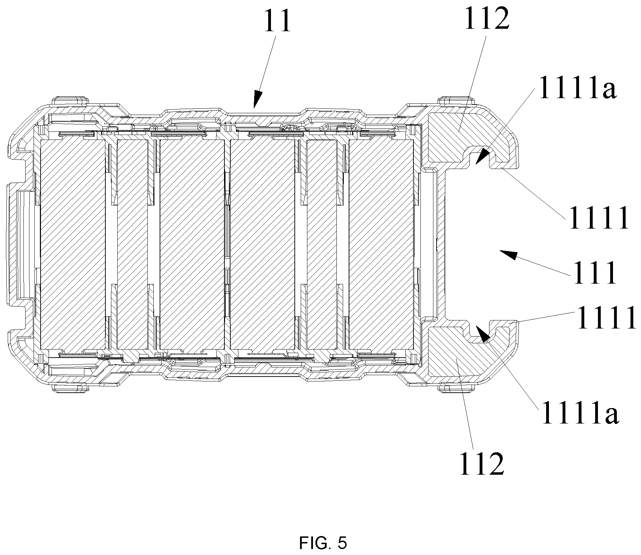

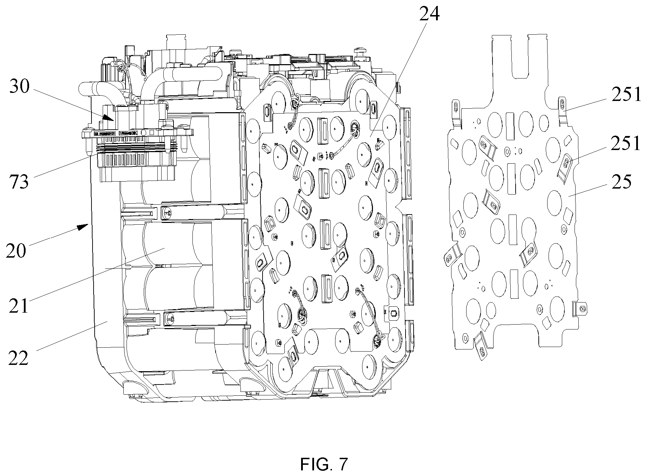

A coupling portion is disposed on at least one side surface of the housing assembly 10. The coupling portion is configured to be coupled to the electronic device and includes at least the terminal assembly 30. In an example, referring to FIGS. 1, 4, and 5, a coupling groove 111 having a shape similar to an inverted "U" is formed on the side surface of the housing assembly 10. The coupling groove 111 includes two opposite groove sidewalls 1111 and a top end wall, and the opening of the coupling groove 111 faces the lower side of the battery pack 100. At least one groove sidewall 1111 of the coupling groove 111 is recessed inward to form a mounting rail 1111a. The mounting rail 1111a can guide the battery pack 100 when the battery pack 100 is mounted to the electronic device. The terminal assembly 30 is mounted at the top end of the coupling groove 111. In an example, a terminal mounting hole is provided at the top end of the housing assembly 10, and the terminal assembly 30 may be mounted on the housing assembly 10 through the terminal mounting hole. One end of the terminal assembly 30 can be disposed in the housing assembly 10, and another end of the terminal assembly 30 is exposed outside the housing assembly 10. Therefore, a mounting gap exists between the terminal assembly 30 and the housing assembly 10. Referring to FIG. 7, the gap between the terminal assembly 30 and the housing assembly 10 may be sealed through a fourth sealing member 73. The fourth sealing member 73 may be at least one of a sealant, a sealing ring, or a sealing sponge here. In an example, referring to FIG. 5, stiffeners 112 are embedded in the two groove sidewalls 1111 of the coupling groove 111 to increase the strength of the groove sidewalls 1111. In an example, the material of the coupling portion is polycarbonate (PC) + acrylonitrile butadiene styrene (ABS), and the material of each of the stiffeners 112 is polypropylene (PP) + a foaming agent. The PC + ABS is easy to shrink and deform, which is not conducive to being positioned in a mold. However, the PP is not easy to deform and shrink and is conveniently positioned in a mold.

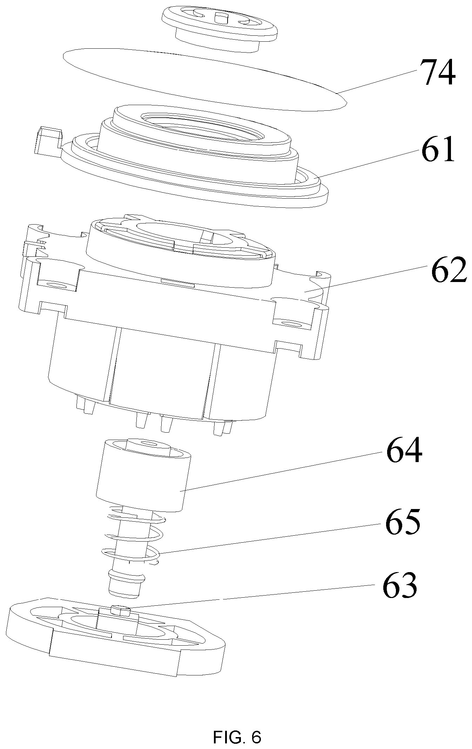

Referring to FIGS. 1 to 3, the battery pack 100 further includes an electronic display assembly 60 disposed on the housing assembly 10. Referring to FIG. 6, the electronic display assembly 60 includes a transparent member 61, a lampshade assembly 62, a switch 63, an adapter 64, and a spring 65. The transparent member 61 is disposed at the upper end of the lampshade assembly 62. The switch 63 is disposed at the lower end of the lampshade assembly 62. The transparent member 61 is made of a soft rubber material and can be pressed to deform, thereby triggering the switch 63. The deformed region of the transparent member 61 is excessively distant from the switch 63, and the transparent member 61 is easy to deform and skew if the transparent member 61 is directly designed to be in contact with the switch 63. Therefore, the adapter 64 and the spring 65 are added between the transparent member 61 and the switch 63 so that the switch 63 is pressed by the transparent member 61 through the adapter 64 and the spring 65. A gap exists between the housing assembly 10 and the electronic display assembly 60. To ensure the sealing property of the housing assembly 10, the gap between the housing assembly 10 and the electronic display assembly 60 is sealed through a fifth sealing member 74. The fifth sealing member 74 may be a sealing ring here. The sealing ring is disposed between the housing assembly 10 and the transparent member 61.

Referring to FIG. 7, the cell module 20 includes multiple cells 21, a cell support 22, and a sealing cover. The multiple cells 21 are disposed in the cell support 22 and can provide a voltage greater than or equal to 36 V. The sealing cover seals and covers the opening side of the cell support 22. In this example, the multiple cells 21 may be lithium iron phosphate batteries. In an example, the cells 21 may be manganese phosphate ion cells 21 or sodium ion cells 21. In an example, the cell support 22 may be constituted by two sub-supports which are detachable and substantially symmetrical. The two sub-supports may be fixed through the screws. To ensure the sealing property of the cell module 20, the end of each of the multiple cells 21 facing the opening side of the cell support 22 is sleeved with a sealing sleeve, and the gap between the sealing cover and the cell support 22 is sealed through a sixth sealing member.

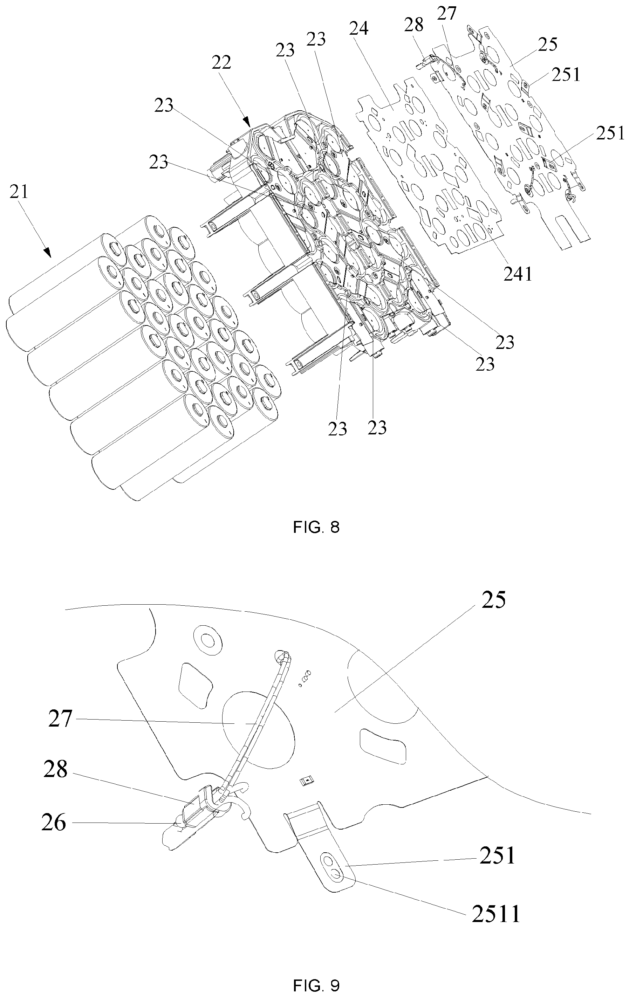

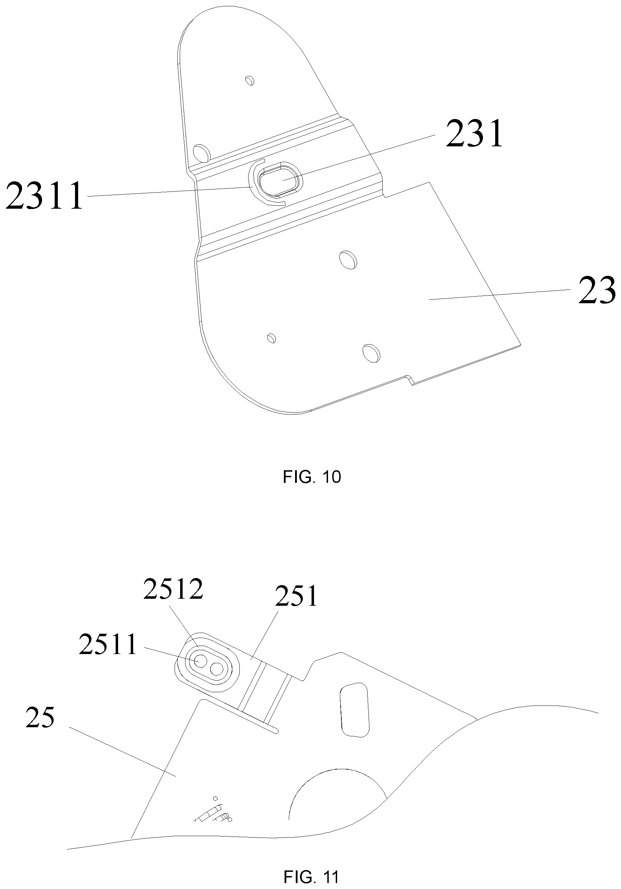

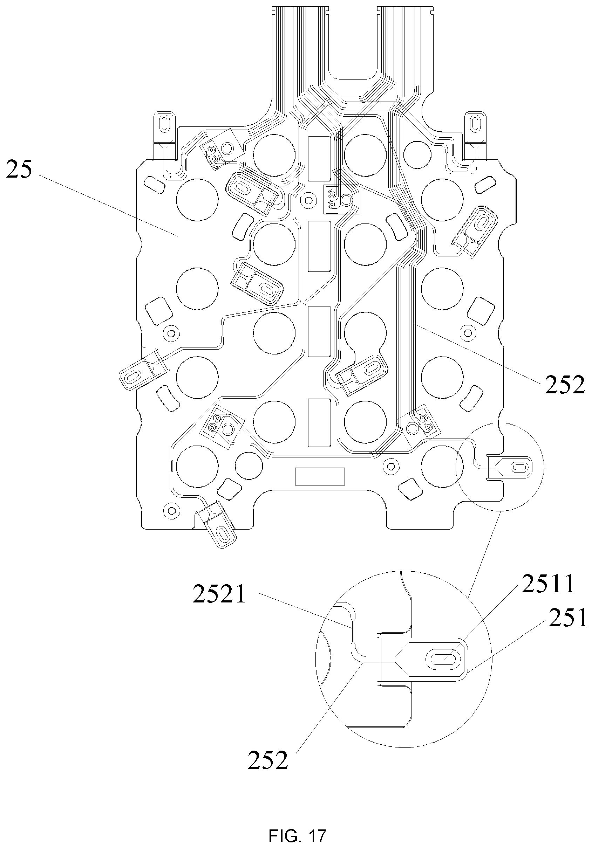

Referring to FIG. 8, the cell module 20 further includes multiple cell connectors 23. Each cell connector 23 can electrically connect at least two cells 21, and the cell connector 23 is connected to the cells 21 through welding. In an example, a group of cells 21 that are connected together through cell connectors 23 are referred to as a battery unit. Each battery unit may have two cell connectors 23, that is, one positive cell connector 23 and one negative cell connector 23. The positive cell connector 23 is connected to the positive electrode of each cell 21 in the battery unit, and the negative cell connector 23 is connected to the negative electrode of each cell 21 in the battery unit. Positive cell connectors 23 form the positive end surface of the cell module 20, and negative cell connectors 23 form the negative end surface of the cell module 20. Referring to FIGS. 7 and 8, a flexible circuit board 25 is disposed on each of the positive end surface and the negative end surface. **In** an example, the flexible circuit board 25 is connected to the cell connectors 23 through welding. **In** an example, as shown in FIG. 9, a pad 251 is provided on the flexible circuit board 25 and is connected to a cell connector 23 through welding. **In** an example, as shown in FIG. 10, a welding slot 231 is provided on the cell connector 23, a through hole 2511 is provided on the pad 251, and a welding material is capable of flowing into the welding slot 231 through the through hole 2511. In an example, the through hole 2511 may include multiple small holes as shown in FIG. 11 or may be one larger through hole as shown in FIG. 17, which can ensure that the welding material flows into the welding slot 231 faster. In an example, to prevent the flexible circuit board 25 from displacement when being welded to the cell connector 23, a first adhesive backing 242 is disposed on the pad 251. Referring to FIG. 11, the pad 251 is connected to the cell connector 23 through the first adhesive backing 242, and then the pad 251 is welded to the cell connector 23.

**In** an example, a heat dissipation space 2311 is provided in at least part of a region on the periphery of the welding slot 231. When the pad 251 is welded to the welding slot 231, the heat dissipation space 2311 can be used for dissipating heat, thereby preventing a cold joint caused by an excessively high welding temperature. It is to be understood that the heat dissipation space 2311 may be a continuous hollow region at one end or multiple discontinuous hollow regions surrounding the welding slot 231, which is not limited here.

In an example, the cell connectors 23 include copper-aluminum composite connectors, and laser welding is used between the copper-aluminum composite connectors and the cells 21 and is used between the copper-aluminum composite connectors. Different welding regions of each of the copper-aluminum composite connectors have different thicknesses. For example, a copper-aluminum composite connector with a thickness of 0.6 mm is laser welded to a terminal of a cell 21. The thicknesses of a copper layer and an aluminum layer in the copper-aluminum composite connector may be 0.1 mm and 0.5 mm, respectively, and the terminal of the cell 21 may be made of aluminum with a thickness of about 2 mm. For another example, the copper-aluminum composite connector with a thickness of 0.6 mm constituted by the copper layer with a thickness of 0.1 mm and the aluminum layer with a thickness of 0.5 mm is laser welded to a copper-aluminum composite connector with a thickness of 3 mm or at least aluminum having a welding surface with a thickness of 3 mm. In an example, the cell connector 23 may be a copper-steel composite connector. It is to be understood that the thickness of the cell connector 23 or the thicknesses of different materials constituting the cell connector 23 may be adjusted according to actual requirements, which are not enumerated here.

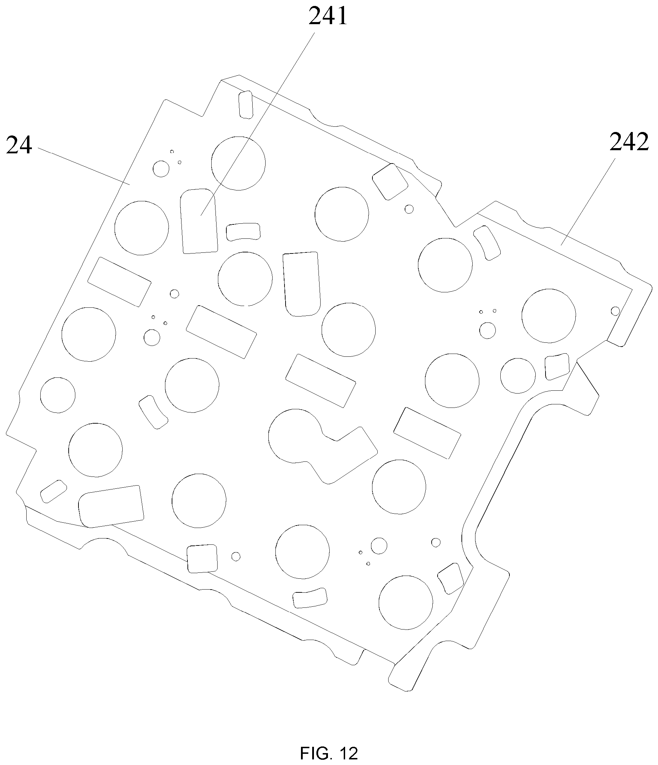

Referring to FIGS. 7 and 8, the battery pack 100 further includes a reinforcement member 24. The reinforcement member 24 is attached to at least part of the flexible circuit board 25 so that the strength of the flexible circuit board 25 is enhanced and the flexible circuit board 25 is convenient to mount. In an example, the reinforcement member 24 is located between the cell connector 23 and the flexible circuit board 25. The reinforcement member 24 is provided with an avoidance region 241 for avoiding the pad 251. In an example, referring to FIG. 12, a second adhesive backing 2512 is disposed at the edge of the reinforcement member 24, and the reinforcement member 24 is connected to the cell support 22 through the second adhesive backing 2512. A third adhesive backing is further disposed on the flexible circuit board 25, and the flexible circuit board 25 is connected to the reinforcement member 24 through the third adhesive backing. In an example, the reinforcement member 24 may be a hard plastic member or a hard sheet made of another material.

Referring to FIG. 9 and FIGS. 13 to 15, the battery pack 100 further includes a temperature detection apparatus 26. The temperature detection apparatus 26 is configured to detect a temperature of the cell 21 and is coupled to the flexible circuit board 25 through a detection power line 27. Tin soldering is used between the detection power line 27 and the flexible circuit board 25. To prevent the temperature detection apparatus 26 from falling off, the battery pack 100 further includes a detection support 28. The detection support 28 is configured to support the temperature detection apparatus 26 so that the position of the temperature detection apparatus 26 in the housing assembly 10 is fixed.

In an example, the detection support 28 may be configured as a support housing. The support housing is configured to be capable of accommodating or supporting the temperature detection apparatus 26. In an example, the support housing may be a plastic housing or at least partially made of plastic. In an example, the support housing is made of a material with good thermal conductivity, for example, metal, which can well conduct the temperature of the cell 21 to the temperature detection apparatus 26.

In an example, the cell support 22 is provided with a fixing hole 222, and the detection support 28 is fixed in the fixing hole 222. In an example, an adhesive is disposed between the fixing hole 222 and the detection support 28 to fix the detection support 28 in the fixing hole 222. In an example, the adhesive is a thermally conductive adhesive. Before the detection support 28 is placed in the fixing hole 222, the thermally conductive adhesive is injected into the fixing hole 222, then the detection support 28 is placed in the fixing hole 222, and the detection support 28 can be fixed after the thermally conductive adhesive is cured. In an example, the cell support 22 is formed with an accommodating cavity 221 for accommodating a cell 21, an avoidance space is provided in the accommodating cavity 221, and the avoidance space communicates with the fixing hole 222. Thus, the temperature detection apparatus 26 can detect the temperature of the cell 21 through the avoidance space. The detection support 28 is provided to fix the temperature detection apparatus 26. Thus, it can be ensured that the temperature detection apparatus 26 can detect the temperature of the cell 21, and the temperature detection apparatus 26 can be prevented from falling off. In an example, the temperature detection apparatus 26 is detachably fixed on the detection support 28 so that it is convenient to perform maintenance and other operations on the temperature detection apparatus 26.

The battery pack 100 further includes a PCB. The PCB includes a control circuit board or a battery management circuit board. The flexible circuit board 25 may include an FDC 252 and/or a flexible flat cable (FFC). The FDC 252 may be electrically connected to the PCB. In an example, the FDC 252 and the PCB are connected to each other through an ACF process. Specifically, an ACF conductive adhesive is laminated through a hot-pressing device so that the PCB and the FDC are electrically connected to each other. In an example, gold fingers on the FDC 252 are connected to gold fingers on the PCB through laser welding. Specifically, solder paste, solder wires, and solder balls between the gold fingers on the PCB and the gold fingers on the FDC 252 are melted through a laser welding device so that the PCB and the FDC 252 are electrically connected to each other.

Referring to FIG. 16, a power line 29 exists in the battery pack 100. A relatively thin power line 29 is fixed through a line clamping slot. For a relatively thick power line 29, a line clamping slot cannot be made because the relatively thick power line 29 has a relatively large line diameter. Therefore, the relatively thick power line 29 may be fixed on the cell support 22 through a power line support 210 or a tie.

Referring to FIG. 17, at least part of FDCs 252 have different cable diameters, that is to say, the FDCs 252 may have different thicknesses. In this example, a relatively thin FDC 2521 may be used as a fuse. In the case where the current on the cell 21 connected to the FDC 252 is excessively large, the thin FDC 2521 is blown, thereby protecting electronic components in the cell 21 or the battery pack 100. In an example, the thin FDC 2521 may be close to the pad 251 or may be disposed at any position of the FDC 252.

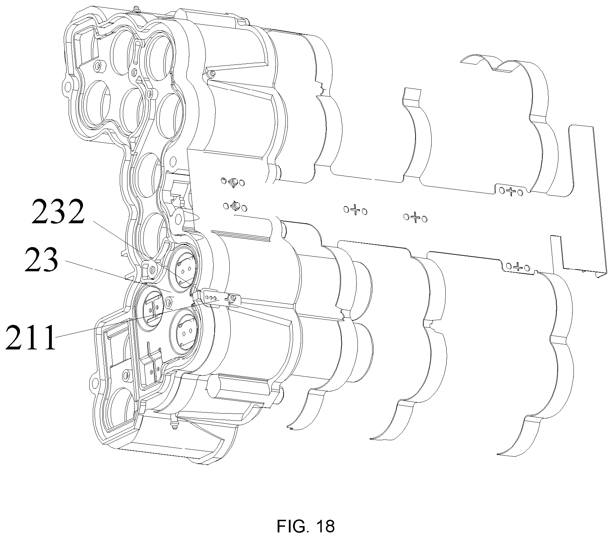

Referring to FIG. 18, the cell module 20 may further include multiple single-cell detection lines 211. The single-cell detection lines 211 are configured to detect electrical parameters of the cells 21. For example, the single-cell detection lines 211 can detect voltages of the cells 21 or currents of the cells 21. The single-cell detection lines 211 are electrically coupled to the cell connectors 23. Specifically, detection connection portions 232 of the cell connectors 23 can be electrically coupled to the single-cell detection lines 211. In an example, the single-cell detection lines 211 may be copper wires. The single-cell copper wire detection lines may be fixedly connected to the cell connectors 23 through laser welding by using a laser beam as a heat source. In an example, the single-cell detection lines 211 may be aluminum wires, and the aluminum wires may be fixed to the cell connectors 23 through an ultrasonic welding technique. In an example, the single-cell detection lines 211 may be fixed to the cell connectors 23 through electric resistance welding or an ultraviolet (UV) conductive adhesive.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A battery pack for powering an electronic device, comprising:
a housing assembly mounted to the electronic device and supported by the electronic device;
a cell module comprising a plurality of cells and a cell support supporting the plurality of cells, wherein the cell module is disposed in the housing assembly; and
at least one temperature detection apparatus configured to detect temperatures of the plurality of cells;
wherein the battery pack further comprises:
a detection support configured to support a temperature detection apparatus of the at least one temperature detection apparatus to cause a position of the temperature detection apparatus in the housing assembly to be fixed.

2. The battery pack for powering the electronic device according to claim 1, wherein the temperature detection apparatus is detachably fixed on the detection support.

3. The battery pack for powering the electronic device according to claim 1, wherein the cell support is provided with a fixing hole, and the detection support is fixed in the fixing hole.

4. The battery pack for powering the electronic device according to claim 3, wherein an adhesive is disposed between the fixing hole and the detection support to fix the detection support in the fixing hole.

5. The battery pack for powering the electronic device according to claim 3, wherein the cell support is formed with an accommodating cavity for accommodating a cell of the plurality of cells, an avoidance space is provided in the accommodating cavity, and the avoidance space communicates with the fixing hole.

6. The battery pack for powering the electronic device according to claim 1, further comprising a coupling portion, wherein the coupling portion comprises at least a terminal assembly, and a stiffener is embedded in the coupling portion.

7. The battery pack for powering the electronic device according to claim 1, further comprising a flexible circuit board, wherein the flexible circuit board is disposed on a module end surface of the cell module formed by positive end surfaces and negative end surfaces of the plurality of cells, and the temperature detection apparatus is electrically coupled to the flexible circuit board through a detection power line.

8. The battery pack for powering the electronic device according to claim 7, wherein tin soldering is used between the detection power line and the flexible circuit board.

9. The battery pack for powering the electronic device according to claim 7, further comprising a printed circuit board (PCB), wherein the PCB comprises a control circuit board or a battery management circuit board, the flexible circuit board comprises a flexible disk cable (FDC) and the FDC is electrically connected to the PCB.

10. The battery pack for powering the electronic device according to claim 9, wherein the FDC and the PCB are connected to each other through an anisotropic conductive film (ACF) process.

11. The battery pack for powering the electronic device according to claim 9, wherein gold fingers on the FDC are connected to gold fingers on the PCB through laser welding.

12. The battery pack for powering the electronic device according to claim 1, wherein the cell module further comprises a plurality of cell connectors, each cell connector of the plurality of cell connectors connects at least two cells of the plurality of cells, and the cell connector is connected to the at least two cells through welding.

13. The battery pack for powering the electronic device according to claim 12, wherein the plurality of cell connectors comprise copper-aluminum composite connectors, and laser welding is used between the copper-aluminum composite connectors and the plurality of cells and is used between the copper-aluminum composite connectors.

14. The battery pack for powering the electronic device according to claim 13, wherein different welding regions of each of the copper-aluminum composite connectors have different thicknesses.

15. The battery pack for powering the electronic device according to claim 1, further comprising a plurality of sealing members, wherein the plurality of sealing members are configured to seal a plurality of gaps of the housing assembly that are capable of communicating with an outside so that a sealing level of the sealed housing assembly is higher than or equal to IPX2.

16. A battery pack for powering an electronic device, comprising:
a housing assembly mounted to the electronic device and supported by the electronic device;
a cell module comprising a plurality of cells and a cell support supporting the plurality of cells, wherein the cell module is disposed in the housing assembly; and
at least one temperature detection apparatus configured to detect temperatures of the plurality of cells;
wherein a temperature detection apparatus of the at least one temperature detection apparatus is operable to be fixed on the cell support through an external apparatus.

17. The battery pack for powering the electronic device according to claim 16, wherein each of the at least one temperature detection apparatus corresponds to one external apparatus, and the external apparatus is configured as a detection support capable of supporting the temperature detection apparatus.

18. The battery pack for powering the electronic device according to claim 16, wherein the external apparatus is configured as a support housing to support the temperature detection apparatus.

19. The battery pack for powering the electronic device according to claim 16, wherein the external apparatus is detachably mounted on the cell support.

20. The battery pack for powering the electronic device according to claim 16, wherein the external apparatus is configured as a plastic member or a metal member.
